# EUROPEAN PATENT APPLICATION

(11) **EP 4 362 558 A2**
(43) Date of publication of application: **01.05.2024**
(21) Application number: 23201629.5
(22) Date of filing: 04.10.2023
(51) Int. Cl.: H04W 48/12, H04W 8/22, H04W 48/16, H04W 84/12, H04W 88/08

(54) **METHOD FOR PERFORMING CONTENT MANAGEMENT UPON BEACON TRANSMISSION AND ASSOCIATED WIRELESS COMMUNICATION DEVICE**

(30) Priority: 07.10.2022 US 202263378706 P; 20.09.2023 US 202318370869
(71) Applicant: MediaTek Inc., Hsin-Chu 300 (TW)
(72) Inventor: HSU, Chien-Fang, 30078 Hsinchu City (TW); CHANG, Chia-Ming, 30078 Hsinchu City (TW)
(74) Representative: Hoefer & Partner Patentanwälte mbB

(57) **Abstract**

A wireless communication method includes: categorizing a plurality of different beacon elements into a first group of elements and a second group of elements; generating a beacon frame (132), which is configured to carry the first group of elements, wherein the beacon frame (132) is compliant to at least one legacy generation of Wi-Fi technology; generating a second frame (134), which is configured to carry the second group of elements, wherein the second frame (134) is compliant to a non-legacy generation of Wi-Fi technology rather than the at least one legacy generation of Wi-Fi technology; and sending the beacon frame (132) and the second frame (134).

## Description

### Cross Reference to Related Applications

This application claims the benefit of U.S. Provisional Application No. 63/378,706, filed on October 7th, 2022. The content of the application is incorporated herein by reference.

### Background

The present invention relates to wireless communications, and more particularly, to a method for performing content management upon beacon transmission and an associated wireless communication device.

A wireless local area network (WLAN) may be formed by one or more access points (APs) that provide a shared wireless medium for use by a number of client devices or stations (STAs) . Each AP, which may correspond to a Basic Service Set (BSS), may periodically broadcast beacon frames to enable any STAs within a wireless range of the AP to establish or maintain a communication link with the WLAN. WLANs that operate in accordance with the IEEE 802.11 family of standards are commonly referred to as Wi-Fi networks.

A beacon frame is a broadcast frame that carries various information elements (or briefly called elements) of BSS operations, announcements, traffic information, and so on. As the WLAN system evolves, the beacon frame size grows and will eventually reach a pre-defined frame size limit. Furthermore, it is possible that certain beacon elements (i.e., information elements that can be carried in the beacon frame) do not change for a long time, and receiving these elements without frequently-updated contents consumes power at the client device (i.e., non-AP STA). Thus, there is a need for an innovative beacon transmission design with proper content management to achieve improved BSS operations, client management (e.g., power saving), airtime management, and so on.

### Summary

One of the objectives of the claimed invention is to provide a method for performing content management upon beacon transmission and an associated wireless communication device. A method and a device according to the invention are defined in the independent claims. The dependent claims define preferred embodiments thereof.

According to a first aspect of the present invention, an exemplary wireless communication method is disclosed. The exemplary wireless communication method includes: categorizing a plurality of different beacon elements into a first group of elements and a second group of elements; generating a beacon frame, which is configured to carry the first group of elements, wherein the beacon frame is compliant to at least one legacy generation of Wi-Fi technology; generating a second frame, which is configured to carry the second group of elements, wherein the second frame is compliant to a non-legacy generation of Wi-Fi technology rather than the at least one legacy generation of Wi-Fi technology; and sending the beacon frame and the second frame.

According to a second aspect of the present invention, an exemplary wireless communication method is disclosed. The exemplary wireless communication method includes: categorizing a plurality of different beacon elements into a first group of elements and a second group of elements, wherein the first group of elements comprises elements with frequently-updated contents, and the second group of elements comprises elements without frequently-updated contents; generating a beacon frame, wherein the beacon frame is configured to carry the first group of elements and the second group of elements in a first contiguous segment and a second contiguous segment of a frame body, respectively; and sending the beacon frame.

According to a third aspect of the present invention, an exemplary wireless communication device is disclosed. The exemplary wireless communication device includes a network interface circuit and a control circuit. The control circuit is arranged to categorize a plurality of different beacon elements into a first group of elements and a second group of elements, generate a beacon frame that is configured to carry the first group of elements, generate a second frame that is configured to carry the second group of elements, and instruct the network interface circuit to send the beacon frame and the second frame. The beacon frame is compliant to at least one legacy generation of Wi-Fi technology. The second frame is compliant to a non-legacy generation of Wi-Fi technology rather than the at least one legacy generation of Wi-Fi technology.

These and other objectives of the present invention will no doubt become obvious to those of ordinary skill in the art after reading the following detailed description of the preferred embodiment that is illustrated in the various figures and drawings.

### Brief Description of the Drawings

FIG. 1 is a diagram illustrating a first Wi-Fi system according to an embodiment of the present invention.
FIG. 2 is a diagram illustrating a second Wi-Fi system according to an embodiment of the present invention.
FIG. 3 is a diagram illustrating a third Wi-Fi system according to an embodiment of the present invention.

### Detailed Description

Certain terms are used throughout the following description and claims, which refer to particular components. As one skilled in the art will appreciate, electronic equipment manufacturers may refer to a component by different names. This document does not intend to distinguish between components that differ in name but not in function. In the following description and in the claims, the terms "include" and "comprise" are used in an open-ended fashion, and thus should be interpreted to mean "include, but not limited to ... ". Also, the term "couple" is intended to mean either an indirect or direct electrical connection. Accordingly, if one device is coupled to another device, that connection may be through a direct electrical connection, or through an indirect electrical connection via other devices and connections.

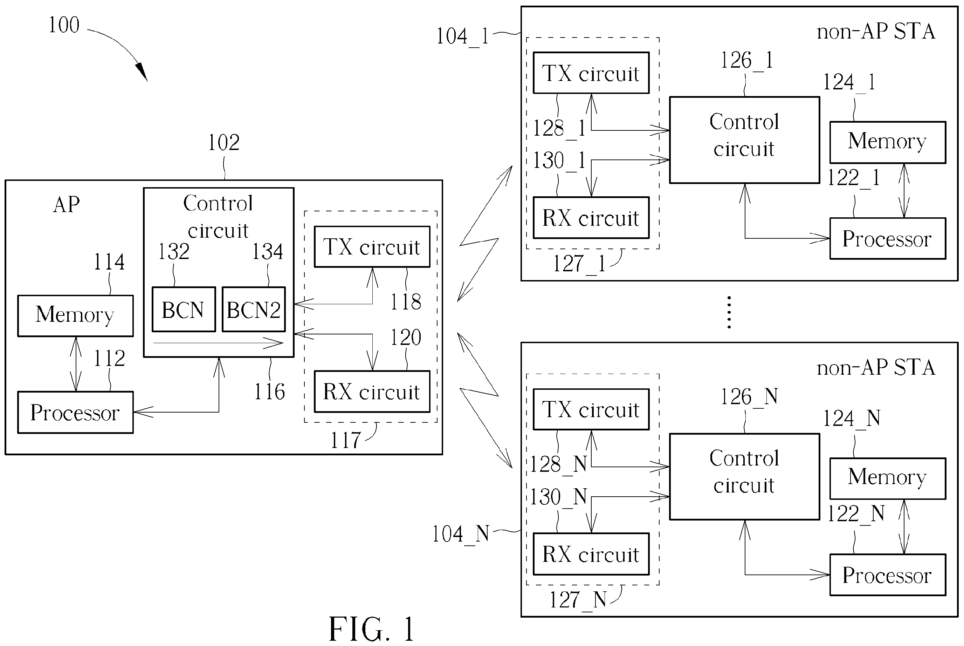

FIG. 1 is a diagram illustrating a first Wi-Fi system according to an embodiment of the present invention. The Wi-Fi system 100 is an 802.11 WLAN, and has a plurality of wireless communication devices, including an AP 102 and one or more non-AP STAs 104_1-104_N (*N* **≥ 1**) . In one scenario, the AP 102 may communication with a single user such as the non-AP station 104_1. In another scenario, the AP 102 may communication with multiple users such as non-AP stations 104_1 and 104_N. For brevity and simplicity, only two non-AP STAs are illustrated. In practice, the Wi-Fi system 100 may include more than two non-AP STAs in the same BSS of the AP 102.

As shown in FIG. 1, the AP 102 includes a processor 112, a memory 114, a control circuit 116, and a network interface circuit 117 including a transmitter (TX) circuit 118 and a receiver (RX) circuit 120. The non-AP STA 104_1/104_N includes a processor 122_1/122_N, a memory 124_1/124_N, a control circuit 126_1/126_N, and a network interface circuit 127_1/127_N including a TX circuit 128_1/128_N and a RX circuit 130_1/130_N. It should be noted that each wireless communication device may be equipped with one or more antennas (not shown), depending upon actual design considerations. Hence, each of the TX circuits 118, 128_1, 128_N may include one or more transmitters, and each of the RX circuits 120, 130_1, 130_N may include one or more receivers.

Regarding the AP 102, the memory 114 is arranged to store a program code, the processor 112 is arranged to load and execute the program code to manage the AP 102, and the control circuit 116 is arranged to control wireless communications with the non-AP STAs 104_1-104_N via the TX circuit 118 and the RX circuit 120 of the network interface circuit 117. Regarding the non-AP STA 104_1/104_N, the memory 124_1/124_N is arranged to store a program code, the processor 122_1/122_N is arranged to load and execute the program code to manage the non-AP STA 104_1/104_N, the control circuit 126_1/126_N is arranged to control wireless communications with the AP 102 via the TX circuit 128_1/128_N and the RX circuit 130_1/130_N of the network interface circuit 127_1/127_N.

In this embodiment, the control circuit 116 of the AP 102 is arranged to support the proposed method for performing content management upon beacon transmission from the AP 102 to the non-AP STAs 104_1-104_N. For example, the control circuit 116 is arranged to categorize a plurality of different beacon elements (i.e., information elements that can be carried in a beacon frame and a proposed second frame) into a first group of elements and a second group of elements, generate a beacon frame (labeled by "BCN") 132 that is configured to carry the first group of elements, generate a second frame (labeled by "BCN2") 134 that is configured to carry the second group of elements, and instruct the network interface circuit 117 (particularly, TX circuit 118 of network interface circuit 117) to send the beacon frame 132 and the second frame 134 to the non-AP STA 104_1-104_N. It should be noted that the beacon frame 132 is compliant to legacy transmission of at least one legacy generation of Wi-Fi technology, and the second frame 134 is compliant to a non-legacy transmission of a non-legacy generation of Wi-Fi technology rather than the at least one legacy generation of Wi-Fi technology. For example, the second frame 134 is newly introduced in a next-generation of Wi-Fi technology, and acts as an extension of the beacon frame 132 used in a current-generation of Wi-Fi technology. To put it another way, the beacon frame 132 is implemented in Wi-Fi Generation X-n (***n* ≥ 1**) and is also implemented in Wi-Fi Generation X due to backward compatibility, and the second frame 134 is a new feature that is implemented in Wi-Fi Generation X and is not supported by Wi-Fi Generation X-n. The second frame 134 is used for second beacon transmission, and can carry extra beacon elements to address the beacon frame bloating issue encountered by the current Wi-Fi standard. The second frame 134 is a new frame, and a frame type of the second frame 134 is not necessarily the same as that of the beacon frame 132. That is, the second frame 134 may be any other frame type, such as an action frame.

In this embodiment, the beacon frame 132 is sent before the second frame 134. Currently, the beacon frame 132 is transmitted in TBTT (target beacon transmission time) announced in the beacon frame 132. In one exemplary design, the second frame 134 is transmitted after the beacon frame 132. For example, the second frame 134 is transmitted after short interframe space (SIFS) following an end of a physical layer protocol data unit (PPDU) that carries the beacon frame 132. Hence, the sequence is "Beacon frame" + "SIFS" + "Second frame". In another exemplary design, the second frame's transmission time is carried in the beacon frame before the next beacon frame. For example, the transmission time can be infinity (or other indication) to indicate that there is no second frame. For another example, the transmission time can be fixed or flexible. For yet another example, the transmission time can be an offset to the beacon transmission time. There can be an indication to indicate that the beacon frame and the second frame are in the same group, so that the client device is not to mix the information of the beacon frame with another second frame which is not in the same group. By way of example, but not limitation, a count carried in the beacon frame and a count carried in the second frame can be properly set to indicate that the beacon frame and the second frame are in the same group.

The proposed method for performing content management upon beacon transmission from the AP 102 to the non-AP STAs 104_1-104_N is applied to the beacon frame 132 and the second frame 134, where the second frame 134 is paired with the beacon frame 132, and the beacon frame 132 is ahead of the second frame 134 in the transmission order. However, this is for illustrative purposes only, and is not meant to be a limitation of the present invention.

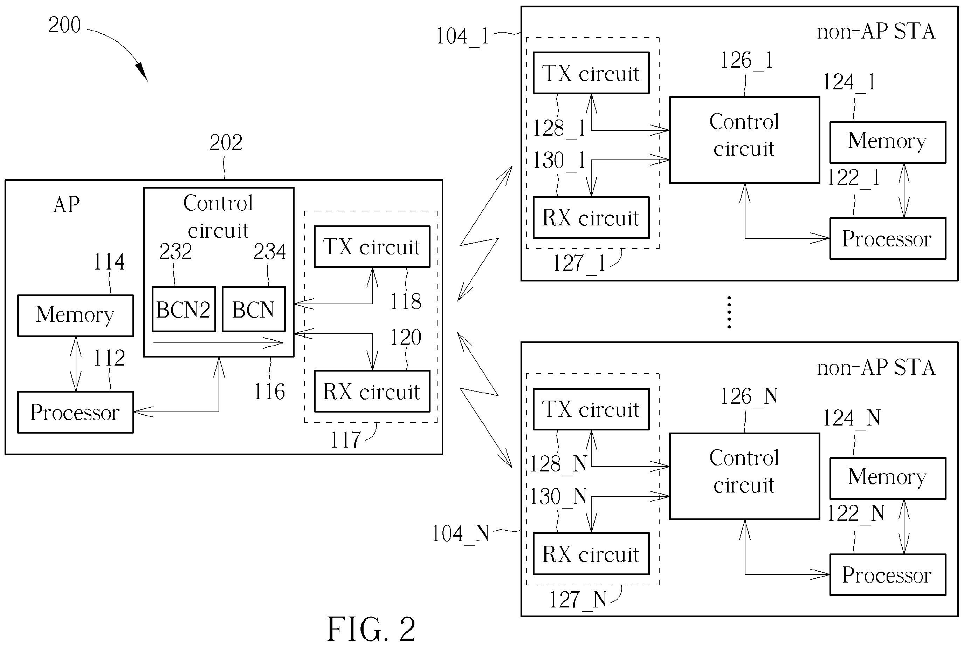

FIG. 2 is a diagram illustrating a second Wi-Fi system according to an embodiment of the present invention. The Wi-Fi system 200 is an 802.11 WLAN, and has a plurality of wireless communication devices, including an AP 202 and one or more non-AP STAs 104_1-104_N (***N* ≥ 1**) . In one scenario, the AP 202 may communication with a single user such as the non-AP station 104_1. In another scenario, the AP 202 may communication with multiple users such as non-AP stations 104_1 and 104_N. For brevity and simplicity, only two non-AP STAs are illustrated. In practice, the Wi-Fi system 200 may include more than two non-AP STAs in the same BSS of the AP 202.

In this embodiment, the control circuit 216 of the AP 202 is arranged to support the proposed method for performing content management upon beacon transmission from the AP 202 to the non-AP STAs 104_1-104_N. For example, the control circuit 216 is arranged to categorize a plurality of different beacon elements (i.e., information elements that can be carried in a beacon frame and a proposed second frame) into a first group of elements and a second group of elements, generate a beacon frame (labeled by "BCN") 234 that is configured to carry the first group of elements, generate a second frame (labeled by "BCN2") 232 that is configured to carry the second group of elements, and instruct the network interface circuit 117 (particularly, TX circuit 118 of network interface circuit 117) to send the second frame 232 and the beacon frame 234 to the non-AP STA 104_1-104_N. It should be noted that the beacon frame 234 is compliant to legacy transmission of at least one legacy generation of Wi-Fi technology, and the second frame 232 is compliant to a non-legacy transmission of a non-legacy generation of Wi-Fi technology rather than the at least one legacy generation of Wi-Fi technology. For example, the second frame 232 is newly introduced in a next-generation of Wi-Fi technology, and acts as an extension of the beacon frame 234 used in a current-generation of Wi-Fi technology. To put it another way, the beacon frame 234 is implemented in Wi-Fi Generation X-n (***n* ≥ 1**) and is also implemented in Wi-Fi Generation X due to backward compatibility, and the second frame 232 is a new feature that is implemented in Wi-Fi Generation X and is not supported by Wi-Fi Generation (X-n) . The major difference between APs 202 and 102 is that the control circuit 216 instructs the network interface circuit 117 (particularly, TX circuit 118 of network interface circuit 117) to send the second frame 232 first. In one exemplary design, the beacon frame 234 is transmitted after the second frame 232. For example, the beacon frame 234 is transmitted after SIFS following an end of a PPDU that carries the second frame 232. Hence, the sequence is "Second frame" + "SIFS" + "Beacon frame".

As mentioned above, the beacon frame 132/234 is configured by the control circuit 116/216 to carry the first group of elements (i.e. , a portion of beacon elements to be transmitted) , and the second frame 134/232 is configured by the control circuit 116/216 to carry the second group of elements (i.e., a remaining portion of beacon elements to be transmitted) . To achieve backward capabilities, while introducing the second frame to the WLAN system, legacy devices that cannot understand the existence of the second frame need to operate normally within the BSS. Hence, beacon elements to be transmitted may be categorized according to different generations of Wi-Fi technology, thereby ensuring that legacy elements broadcasted from the AP can be successfully received by legacy devices.

In accordance with a first content management design proposed by the present invention, the first group of elements carried by the beacon frame 132/234 may include elements defined in the at least one legacy generation of Wi-Fi technology, and the second group of elements carried by the second frame 134/232 may include elements newly defined in the non-legacy generation of Wi-Fi technology. For example, elements defined in the at least one legacy generation of Wi-Fi technology may include mandatory beacon elements and optional beacon elements, where the mandatory beacon elements may be actually implemented in the at least one legacy generation of Wi-Fi technology, and the optional beacon elements may not be actually implemented in the at least one legacy generation of Wi-Fi technology. These optional beacon elements defined in the at least one legacy generation of Wi-Fi technology may become mandatory in the non-legacy generation of Wi-Fi technology. Hence, elements defined in the at least one legacy generation of Wi-Fi technology may include elements implemented in the at least one legacy generation of Wi-Fi technology and the non-legacy generation of Wi-Fi technology, and elements implemented in the non-legacy generation of Wi-Fi technology but not in the at least one legacy generation of Wi-Fi technology.

In accordance with a second content management design proposed by the present invention, the first group of elements carried by the beacon frame 132/234 may include elements implemented in the at least one legacy generation of Wi-Fi technology, and the second group of elements carried by the second frame 134/232 may include elements that are defined in the at least one legacy generation of Wi-Fi technology and implemented in the non-legacy generation of Wi-Fi technology but not in the at least one legacy generation of Wi-Fi technology, and elements that are newly introduced in the non-legacy generation of Wi-Fi technology.

Certain beacon contents usually do not change for a long period. For example, content of a capability element may remain the same as the content of the capability element in previously transmitted beacon frame. If a client device already receives a beacon frame or a second frame that carries these beacon contents that are not frequently updated, it is not necessary to receive the same contents again. Hence, the non-AP STAs 104_1-104_N may ignore the same contents sent from the AP 102 to save power. Some beacon contents, such as traffic indication map (TIM) element and BSS load element, are changing as time goes by, meaning these elements have frequently-updated contents. Hence, a client device needs to frequently update information in these elements. Based on such observation, the control circuit 116/216 may be designed to categorize different beacon elements according to content update statuses.

In accordance with a third content management design proposed by the present invention, the beacon frame 132 is sent before the second frame 134, the first group of elements carried by the beacon frame 132 includes elements with frequently-updated contents, and the second group of elements carried by the second frame 134 includes elements without frequently-updated contents. That is, elements that include contents different from that in elements of previously transmitted beacon frame or second frame are grouped and carried in the currently transmitted beacon frame, and elements that remain the same as elements of previously transmitted beacon frame or second frame are grouped and carried in the currently transmitted second frame. Hence, the client device is allowed to receive the beacon frame (which carries elements with frequently-updated contents) 132 without receiving the following second frame (which carries elements without frequently-updated contents) 134 for power saving. For example, the beacon frame 132 is further configured to carry indication information that is set to indicate the second frame 134 is ignorable or not updated, where the indication information may be set by a flag or a count of the revision of updated contents.

In accordance with a fourth content management design proposed by the present invention, the second frame 232 is sent before the beacon frame 234, the first group of elements carried by the beacon frame 234 includes elements without frequently-updated contents, and the second group of elements carried by the second frame 232 includes elements with frequently-updated contents. That is, elements that include contents different from that included in elements of previously transmitted beacon frame or second frame are grouped and carried in the currently transmitted second frame, and elements that remain the same as elements in previously transmitted beacon frame or second frame are grouped and carried in the currently transmitted beacon frame. Hence, the client device is allowed to receive the second frame (which carries elements with frequently-updated contents) 232 without receiving the following beacon frame (which carries elements without frequently-updated contents) 234 for power saving. For example, the second frame 232 is further configured to carry indication information that is set to indicate the beacon frame 234 is ignorable or not updated, where the indication information may be set by a flag or a count of the revision of updated contents.

With regard to the first and second content management designs mentioned above, the control circuit 116/216 categorizes beacon elements according to generations of Wi-Fi technology. With regard to the third and fourth content management designs mentioned above, the control circuit 116/216 categorizes beacon elements according to content update statuses. In some embodiments of the present invention, the control circuit 116 may categorize beacon elements by jointly considering generations of Wi-Fi technology and content update statuses.

Beacon elements may be divided into 4 types, including legacy elements without frequently-updated contents (LN), legacy elements with frequently-updated contents (LC), Gen X elements without frequently-updated contents (XN), and Gen X elements with frequently-updated contents (XC), where legacy elements (i.e., elements of types LN and LC) are defined in the at least one legacy generation of Wi-Fi technology, and Gen X elements (i.e., elements of types XN and NC) are newly defined in the non-legacy generation Gen X of Wi-Fi technology.

In addition, legacy elements without frequently-updated contents (i.e., elements of type LN) can be divided into 2 sub-types, including legacy elements that are implemented in the non-legacy generation of Wi-Fi technology but not in the at least one legacy generation of Wi-Fi technology (LNA), and legacy elements that are implemented in the at least one legacy generation of Wi-Fi technology and the non-legacy generation of Wi-Fi technology (LNB) . Similarly, legacy elements with frequently-updated contents (i.e., elements of type LC) can be divided into 2 sub-types, including legacy elements that are implemented in the non-legacy generation of Wi-Fi technology but not in the at least one legacy generation of Wi-Fi technology (LCA), and legacy elements that are implemented in the at least one legacy generation of Wi-Fi technology and the non-legacy generation of Wi-Fi technology (LCB).

In accordance with a fifth content management design proposed by the present invention, the beacon frame 132 is sent before the second frame 134, the first group of elements carried by the beacon frame 132 includes elements of types LN, LC, and XC, and the second group of elements carried by the second frame 134 includes elements of type XN. Furthermore, the client device is allowed to receive the beacon frame (which carries elements with frequently-updated contents) 132 without receiving the following second frame (which carries elements without frequently-updated contents) 134 for power saving. For example, the beacon frame 132 is further configured to carry indication information that is set to indicate the second frame 134 is ignorable or not updated, where the indication information may be set by a flag or a count of the revision of updated contents.

In accordance with a sixth content management design proposed by the present invention, the beacon frame 132 is sent before the second frame 134, the first group of elements carried by the beacon frame 132 includes elements of types LNB, LCA, LCB, and XC, and the second group of elements carried by the second frame 134 includes elements of types XN and LNA. Furthermore, the client device is allowed to receive the beacon frame (which carries elements with frequently-updated contents) 132 without receiving the following second frame (which carries elements without frequently-updated contents) 134 for power saving. For example, the beacon frame 132 is further configured to carry indication information that is set to indicate the second frame 134 is ignorable or not updated, where the indication information may be set by a flag or a count of the revision of updated contents.

As mentioned above, categorizing beacon elements into elements with frequently-updated contents and elements without frequently-updated contents and putting elements with frequently-updated contents and elements without frequently-updated contents in different frames for transmission can enable the client devices (e.g., non-AP STAs 104_1-104_N) to achieve power saving by ignoring elements without frequently-updated contents. The same concept may be applied to a single beacon frame case.

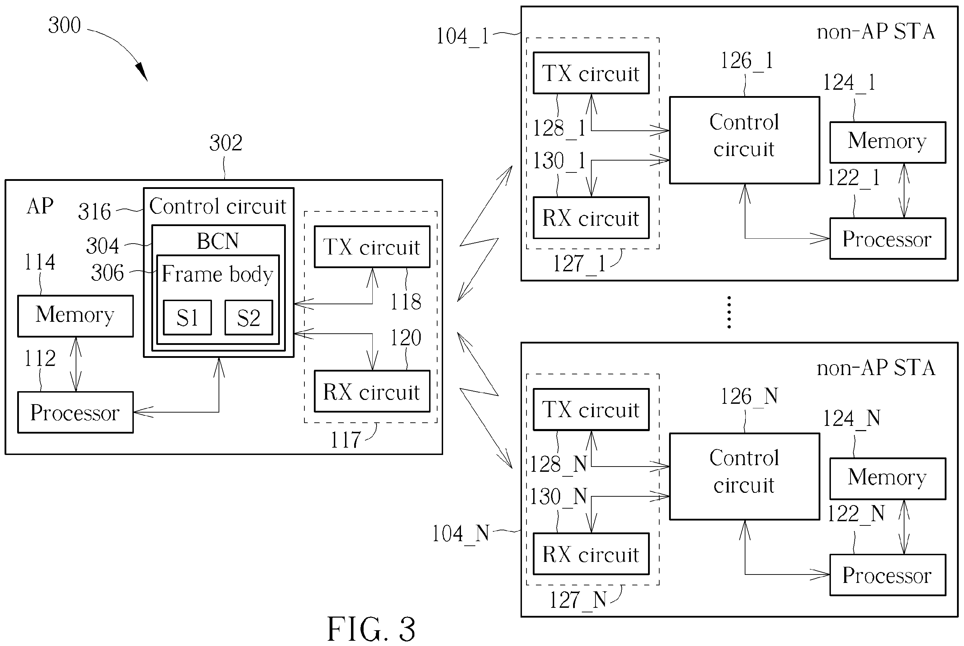

FIG. 3 is a diagram illustrating a third Wi-Fi system according to an embodiment of the present invention. The Wi-Fi system 300 is an 802.11 WLAN, and has a plurality of wireless communication devices, including an AP 302 and one or more non-AP STAs 104_1-104_N (***N* ≥ 1**). In one scenario, the AP 302 may communication with a single user such as the non-AP station 104_1. In another scenario, the AP 302 may communication with multiple users such as non-AP stations 104_1 and 104_N. For brevity and simplicity, only two non-AP STAs are illustrated. In practice, the Wi-Fi system 300 may include more than two non-AP STAs in the same BSS of the AP 302.

In this embodiment, the control circuit 316 of the AP 302 is arranged to support the proposed method for performing content management upon beacon transmission from the AP 302 to the non-AP STAs 104_1-104_N. For example, the control circuit 316 is arranged to categorize a plurality of different beacon elements (i.e., information elements that can be carried in a beacon frame) into a first group of elements and a second group of elements, generate a beacon frame (labeled by "BCN") 304 that is configured to carry the first group of elements and the second group of elements, and instruct the network interface circuit 117 (particularly, TX circuit 118 of network interface circuit 117) to send the beacon frame 304 to the non-AP STAs 104_1-104_N. In this embodiment, the first group of elements includes elements with frequently-updated contents, the second group of elements includes elements without frequently-updated contents, and the single beacon frame 304 is configured to carry the first group of elements and the second group of elements in a first contiguous segment S1 and a second contiguous segment S2 of a frame body 306, respectively. The first contiguous segment S1 is ahead of the second contiguous segment S2 in the transmission order. Hence, the first group of elements (which includes elements with frequently-updated contents) is sent before the second group of elements (which includes elements without frequently-updated contents). The client device can ignore the second group of elements (which includes elements without frequently-updated contents) for power saving.

In some embodiments of the present invention, a new element with a specific element identifier (ID) and a specific element extension ID (if needed), say "boundary element", may be introduced to help the client device to distinguish between the first group of elements (which includes elements with frequently-updated contents) and the second group of elements (which includes elements without frequently-updated contents) in the frame body 306 of the single beacon frame 304. Since the client device may only receive the first group of elements (which includes elements with frequently-updated contents), an additional error correct code may be inserted after the boundary element to guarantee the correctness of updated contents transmitted over the air. For example, the frame body 306 may have a format as illustrate in the following table.

**Table 1**

| | | | | |
|---|---|---|---|---|
| Element Part 1 | Boundary element | CRC1 | Element Part 2 | CRC2 |

The boundary element can be empty or can carry a count of the revision of updated contents, and can act as a boundary to separate the elements with frequently-updated contents and the elements without frequently-updated contents. The elements (labeled by "Element Part 1") transmitted before the boundary element have content change. The elements (labeled by "Element Part 2") transmitted after the boundary element have no content change. The client device can decide to stop decoding/receiving a remaining part of the beacon frame 304 after receiving the boundary element. For example, elements with frequently-updated contents (i.e., Element Part 1), boundary element, and error correction code CRC1 are received by the client device, and elements without frequently-updated contents (i.e., Element Part 2) and error correction code CRC2 can be ignored by the client device for power saving. The error correction code CRC1 is generated from elements with frequently-updated contents (i.e., Element Part 1) and the boundary element. The error correction code CRC2 is generated from elements with frequently-updated contents (i.e., Element Part 1), boundary element, error correction code CRC1 (optional), and elements without frequently-updated contents (i.e., Element Part 2) .

Those skilled in the art will readily observe that numerous modifications and alterations of the device and method may be made while retaining the teachings of the invention. Accordingly, the above disclosure should be construed as limited only by the metes and bounds of the appended claims.

## Claims

1. A wireless communication method comprising:
categorizing a plurality of different beacon elements into a first group of elements and a second group of elements;
generating a beacon frame, which is configured to carry the first group of elements, wherein the beacon frame is compliant to at least one legacy generation of Wi-Fi technology;
generating a second frame, which is configured to carry the second group of elements, wherein the second frame is compliant to a non-legacy generation of Wi-Fi technology rather than the at least one legacy generation of Wi-Fi technology; and
sending the beacon frame and the second frame.

2. The wireless communication method of claim 1, wherein the first group of elements comprises elements defined in the at least one legacy generation of Wi-Fi technology, and the second group of elements comprise elements newly defined in the non-legacy generation of Wi-Fi technology.

3. The wireless communication method of claim 1 or 2, wherein the first group of elements comprises elements implemented in the at least one legacy generation of Wi-Fi technology, and the second group of elements comprises:
first elements, defined in the at least one legacy generation of Wi-Fi technology, and implemented in the non-legacy generation of Wi-Fi technology; and
second elements, defined in the non-legacy generation of Wi-Fi technology rather than in the at least one legacy generation of Wi-Fi technology.

4. The wireless communication method of any one of claims 1 to 3, wherein the first group of elements comprises elements with frequently-updated contents, and the second group of elements comprises elements without frequently-updated contents.

5. The wireless communication method of any one of claims 1 to 4, wherein the beacon frame is sent before the second frame, and the beacon frame is further configured to carry indication information that is set to indicate the second frame is not updated.

6. The wireless communication method of any one of claims 1 to 3, wherein the second group of elements comprises elements with frequently-updated contents, and the first group of elements comprises elements without frequently-updated contents.

7. The wireless communication method of any one of claims 1 to 3 and 6, wherein the second frame is sent before the beacon frame, and the second frame is further configured to carry indication information that is set to indicate the beacon frame is not updated.

8. The wireless communication method of any one of claims 1 to 5, wherein the first group of elements comprises:
first elements, defined in the at least one legacy generation of Wi-Fi technology, and
second elements with frequently-updated contents, wherein the second elements are implemented in the non-legacy generation of Wi-Fi technology but not in the at least one legacy generation of Wi-Fi technology; and
the second group of elements comprises:
third elements without frequently-updated contents, wherein the third elements are implemented the non-legacy generation of Wi-Fi technology but not in the at least one legacy generation of Wi-Fi technology.

9. The wireless communication method of any one of claims 1 to 5, wherein the first group of elements comprises:
first elements, implemented in the at least one legacy generation of Wi-Fi technology;
second elements with frequently-updated contents, wherein the second elements are defined in the at least one legacy generation of Wi-Fi technology, and implemented in the non-legacy generation of Wi-Fi technology but not in the at least one legacy generation of Wi-Fi technology; and
third elements with frequently-updated contents, wherein the third elements are implemented in the non-legacy generation of Wi-Fi technology but not in the at least one legacy generation of Wi-Fi technology; and
the second group of elements comprises:
fourth elements without frequently-updated contents, wherein the fourth elements are defined in the at least one legacy generation of Wi-Fi technology, and implemented in the non-legacy generation of Wi-Fi technology but not in the at least one legacy generation of Wi-Fi technology; and
fifth elements without frequently-updated contents, wherein the fifth elements are implemented in the non-legacy generation of Wi-Fi technology but not in the at least one legacy generation of Wi-Fi technology.

10. The wireless communication method of claim 8 or 9, wherein the first elements comprise elements without or with frequently-updated contents.

11. A wireless communication method comprising:
categorizing a plurality of different beacon elements into a first group of elements and a second group of elements, wherein the first group of elements comprises elements with frequently-updated contents, and the second group of elements comprises elements without frequently-updated contents;
generating a beacon frame, wherein the beacon frame is configured to carry the first group of elements and the second group of elements in a first contiguous segment and a second contiguous segment of a frame body, respectively; and
sending the beacon frame.

12. The wireless communication method of claim 11, wherein the first group of elements is sent before the second group of elements.

13. The wireless communication method of claim 12, wherein the frame body of the beacon frame is further configured to carry a specific element following the first group of elements, and the specific element acts as a boundary to separate the elements with frequently-updated contents and the elements without frequently-updated contents.

14. The wireless communication method of claim 13, wherein the frame body of the beacon frame is further configured to carry a first error correction code following the specific element and preceding the second group of elements, and is further configured to carry a second error correction code following the second group of elements.

15. A wireless communication device (102) comprising:
a network interface circuit (117); and
a control circuit (116), arranged to categorize a plurality of different beacon elements into a first group of elements and a second group of elements, generate a beacon frame (132) that is configured to carry the first group of elements, generate a second frame (134) that is configured to carry the second group of elements, and instruct the network interface circuit (117) to send the beacon frame (132) and the second frame (134);
wherein the beacon frame (132) is compliant to at least one legacy generation of Wi-Fi technology; and the second frame (134) is compliant to a non-legacy generation of Wi-Fi technology rather than the at least one legacy generation of Wi-Fi technology.
